(19) Europäisches Patentamt
European Patent Office
Office européen des brevets

(11) **EP 4 443 385 A1**

(12) **EUROPEAN PATENT APPLICATION**

(43) Date of publication:
**09.10.2024 Bulletin 2024/41**

(21) Application number: **23166350.1**

(22) Date of filing: **03.04.2023**

(51) International Patent Classification (IPC):
**G06T 7/194** (2017.01)　　　**G06T 19/20** (2011.01)
**G06V 40/16** (2022.01)

(52) Cooperative Patent Classification (CPC):
**G06T 7/194; G06T 15/20; G06T 17/00;
G06V 10/82;** G06T 2207/10024; G06T 2207/20081;
G06T 2207/20084; G06T 2207/30196

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(72) Inventors:
• **KOEHLER, Johannes**
  **67663 Kaiserslautern (DE)**
• **NOELL, Tobias**
  **67657 Kaiserslautern (DE)**

(74) Representative: **Kraus & Lederer PartGmbB
Thomas-Wimmer-Ring 15
80539 München (DE)**

(71) Applicant: **Carl Zeiss Vision International GmbH
73430 Aalen (DE)**

(54) **APPARATUS AND METHOD FOR GENERATING A REPRESENTATION OF A SPECTACLE FRAME**

(57) A method for generating a representation of a spectacle frame and a corresponding device are provided. The method comprises computer-implemented steps pf receiving a plurality of images of the spectacle frame with different perspectives and different backgrounds, determining colour information and opacity information of the spectacle frame for each of the perspectives based on the plurality of images and the different backgrounds, and training a neural rendering network based on the opacity information for each perspective.

Fig. 2

Processed by Luminess, 75001 PARIS (FR)

## Description

The present application relates to methods and apparatuses for generating a representation of a spectacle frame and to applications to such representations.

For various applications like displaying the representation on a screen for a user, virtual try-on or virtual determination of centration parameters, a representation of a spectacle frame in form of data on a computer is needed. Conventionally, 3D models of spectacle frames are used for such purposes. A 3D model of a spectacle frame may for example consist of vertices connected by lines and additional colour data.

Displaying the representation on a screen of an apparatus such as a computer, a tablet or a mobile phone, etc. for a user or virtual try-on relates to applications where for example a customer can select spectacle frames online, without the need to go to a store where a plurality of different spectacle frames are physically present. The selected frames are then shown on a model of the customer's head to give a visual impression. Such a virtual try-on is for example described in WO1016/135078A1.

Centration, where centration parameters for fitting spectacle glasses into a spectacle frame are determined, is for example described in WO2017/174525A1. While in some approaches described in this document centration is performed on a person using real spectacle frames, in other approaches described in this document a virtual centration process using a model of the spectacle frame is disclosed.

In particular for applications like virtual try-on, the spectacle frame should appear for example on a computer display fitted to a head of the customer as realistically as possible, such that the customer gets a correct visual impression of how the spectacle frame looks on the customer. In this respect, a spectacle frame, as used herein, refers to an entity intended to accommodate spectacle glasses, and also includes rimless spectacle frames, transparent spectacle frames, semi-transparent spectacle frames and the like.

Besides the above mentioned conventional approach of using a 3D model as computer representation of the spectacle frame, recently, neural rendering techniques have become of more interest. In neural rendering, generally a neural network is trained by a plurality of views of an object (in this case a spectacle frame) from different perspectives, i.e. by images captured from different directions. Based on the trained neural network views of the object from other perspectives, not included in the images used for training, can be generated. In other words, the trained neural network also is a representation of the object, in this case a spectacle frame, which may be used instead of the conventional 3D model. For instance, one type of neural rendering techniques are neural radiance fields, as described for example in B. Mildenhall et al., "NeRF: Representing Scenes as Neural Radiance Fields for View Synthesis", arXv: 2003.08934v2, with additional information available on https://www.matthewtancik.com/nerf. Neural radiance fields may for example use a non-convolutional multilayer perceptron as neural network. Other neural rendering approaches may use other types of neural networks like convolutional neural networks. Such a neural network used for neural rendering techniques will be referred to as neural rendering network herein.

While such conventional neural rendering networks may be trained based on images of transparent objects, i.e. objects having a certain opacity, this often does not lead to a correct representation of such transparent objects. For example, if images of a transparent or semi-transparent spectacle frame are captured in front of a dark background, the transparent parts appear dark, and when for example used in a virtual try-on also appear dark and do for example not correctly let the skin of the head shine through fully or partially. For example, in some conventional neural radiance fields translucency is only modelled within a volume, which is a technical means, which results in differentiability of the method and makes it trainable in a neural network. In other words, in such neural rendering approaches the transparent objects are rendered as they were seen in the input images, and background shining through the object cannot be replaced.

Further neural radiance fields are described in K. Zang et al, NeRF++: Analyzing and Improving Neural Radiance Fields, arXiv 2010.07492 or C. Xie et al, "FiG-NeRF: Figure-Ground Neural Radiance Fields for 3D Object Category Modelling", arXiv: 2104.08418v1.

H. Luo "Convolutional Neural Opacity Radiance Field", arXiv: 2104.017772v1 adds the concept of an alpha channel as output to a neural radiance field. However, this approach operates on a set of individual images shot in front of a fixed, in this case green, background. For each object position only a single image is used to compute the alpha channel by employing Trimap-based alpha matting. This means that the background is not known isolated from the foreground, i.e. the object in question like a spectacle frame. This makes the method suitable for single colour hair and fur, but it does not work for transparent objects, the colour of which changes across a surface of the object because not enough constraints are provided to separate the foreground from the background. In other words, for a single image of a (semi)transparent, colored object, it is not clear if the color change results from the object itself or from the background. Therefore, the opacity itself cannot fully be represented correctly for example in rendered images.

Therefore, it is an object to provide a possibility for an improved representation of spectacle frames taking also opacity into account. This essentially can be seen as a measurement of the opacity and the true colour independent of the background of a real spectacle frame and including this measured data in the representation. The true colour, in this respect, is the colour the spectacle frame actually has, which depending on the opacity may differ from the colour of the spectacle frame as it appears in images, as there the true colour of the spectacle frame may be mixed with the background colour.

According to an embodiment, a method suitable for generating a representation of a spectacle frame is provided, comprising computer-implemented steps of:

- receiving a plurality of images of the spectacle frame with different perspectives,
- determining colour information of the spectacle frame for each of the perspectives based on the plurality of images,

characterized in that

the providing of the plurality of images of the spectacle frame comprises providing the plurality of images of the spectacle frame with different backgrounds,
and in that the method further comprises:

determining opacity information for each of the perspectives based on the images with different backgrounds; and
training the neural rendering network based on the opacity information of the spectacle frame for each perspective.

By using different backgrounds, a robust separation between the spectacle frame, also referred to as foreground herein, and the background may be obtained, including a determination of the opacity information and colour information. In this way, a neural rendering network may also be correctly trained for opacity, such that rendered images exhibit correct opacity properties.

Optionally, like in conventional neural rendering networks described in the introductory portion, the neural rendering network may also be trained based on the colour information, such that by the method the neural rendering network is trained both with colour information and opacity information.

In other words, the colour information, for example in the form of red, green and blue for each pixel (picture element) of the spectacle frame, is supplemented by an additional channel, namely the opacity information, again for each pixel. This additional channel will also be referred to as alpha channel herein and may be processed by the neural rendering network together with the colour information in the same manner as in conventional network neural rendering networks, for example the ones mentioned above, process colour information (e.g. RGB information, or similar to the use of the alpha channel in the above article of Luo et al.). For example, instead of colour information with three values like red, green, blue, now information with four values, e.g. red, green, blue and opacity, is processed, but otherwise the structure and training of the neural rendering network may stay essentially the same. Furthermore, by using different backgrounds, a more robust separation of foreground and background and thus improved determination of the opacity information may be obtained, which in turn leads to a more realistic rendering.

In the above mentioned method, different backgrounds mean for example different background colours, different background textures or combinations thereof. As will be explained below in some more detail, different background colours may for example be obtained by providing background screens of different colours, or may be obtained for example by capturing images of the spectacle frame in different direction in a normal room, which typically provides different backgrounds when facing in different directions.

While colour information above has been given as RGB (red, green, blue) information above, other kinds of colour coding, for example CYMK (cyan, yellow, magenta, key) or HSV (hue, saturation, value) may be used. Opacity generally describes how much light is able to pass through a material.

Perspective generally relates to information about a direction from which the image was captured, possibly together with other information like distance from where it was captured, properties of a lens used like focal length, aberrations etc. Aberrations may also be corrected in camera software, as common in many digital cameras nowadays. The perspective may be determined using for example a calibrated apparatus, which will be described further below, where the position of the camera relative to the spectacle frame when capturing the images is known by design of the apparatus. In other embodiments, the perspective and other information as mentioned above (also referred to as calibration information) may be derived from the images itself. Such a calibration may be performed in any conventional manner, for example as described in the chapter "Camera and Projector Calibration" in J.D. Köhler, "Enhanced Usability and Applicability for Simultaneous Geometry and Reflectance Acquitsion", Dissertation, University of Kaiserslautern, 2015, Verlag Dr. Hut, ISBN 978-3-8439-2465-8.

In some embodiments, the plurality of images include image pairs, wherein each pair in one of the image the spectacle frame is provided against the respective background, whereas the other image of the pair includes only the background, without the spectacle frames. In other embodiments, the background may for example have a uniform known colour (for example when sheets with the respective colour are provided as a background. In this case, no additional image for the background is necessary (i.e. no image pairs), whereas the approach with the image pairs has the advantage that any background can be used. Nevertheless, also in approaches where the background has a known colour image pairs may be used for ease of computation and robustness.

The separation of the spectacle frame, i.e. the foreground, from the background, to determine the colour information and the opacity information may then be performed advantageously by solving, for each perspective, an equation system of equations linking the true colour of the spectacle frame, its opacity, the background colour and the colour of the spectacle frame in the image for each image, e.g. according to the so called alpha blending equation:

$$C = \alpha F + (1-\alpha)B.$$

In the above equation, C is the colour of the spectacle frame in the image for a given pixel, F is the foreground colour, i.e. the true colour of the spectacle frame at the respective pixel without influence from the background, $\alpha$ is the opacity of the spectacle frame for the respective pixel and B is the background colour. With the alpha blending equation, a robust determination of the colour information and the opacity information is possible. More details on alpha blending may be found in T. Porter et al, "Compositing Digital Images", Computer Graphics Vol. 18 No. 3, July 1984.

The background colour, as explained above, is either known by design (for example when a screen in the background colour is provided) or from the other image of the respective image pair, which shows only the background. C is known from the image of the spectacle frame. Therefore, there are two unknown variables, F and $\alpha$. Using at least two different backgrounds for the same perspective, this corresponds to linear equations with two unknown variables $\alpha$ and F, which may be solved. In contrast to techniques applied to a single image or a single pair of foreground/background images as in the prior art, this allows for a more robust determination of $\alpha$ and F. It should be noted that more than two different backgrounds may also be used, which may increase accuracy of the determination, for example by applying conventional statistics and approaches for overdetermined equation systems, as usual when improving a measurement result by performing the respective measurement a plurality of times.

Various neural rendering approaches may be used for the neural rendering network which is trained by the colour information and opacity information for each perspective. For example, the neural radiance fields discussed above may be used, or an approach as disclosed by D. Rueckert et al, "ADOP: Approximate Differentiable One-Pixel Point Rendering", arXiv:2110.06635v3 may be used. Such conventional approaches are simply expanded by using the alpha channel mentioned above as a kind of additional colour channel. Therefore, using the determination of the alpha channel, i.e. measuring of opacity as mentioned above, rendering of spectacle frames with realistic opacity, is enabled.

For example, the approach $F(x,y,z,\theta,\phi) \to (R,G,B,\sigma)$ discussed by B. Mildenhall et al. cited above, where $(\theta,\phi)$ represents the perspective, i.e. viewing direction and $(x,y,z)$ the spatial location as input to a neural rendering network F results in the volume density $\sigma$ and view-dependent emitted radiance (RGB), is simply expanded to $F(x,y,z,\theta,\phi) \to (R,G,B,A,\sigma)$, where A is the opacity information, which is also used for training.

In another embodiment, an apparatus for generating a representation of a spectacle frame may be provided. The apparatus comprises a data processing system, for example an image processing device, comprising a processor configure to perform the computer-implemented method steps mentioned above, i.e. configured at least for:

- receiving a plurality of images of the spectacle frame with different perspectives,
- determining colour information of the spectacle frame for each of the perspectives based on the plurality of images,

characterized in that

the receiving of the plurality of images of the spectacle frame comprises providing the plurality of images of the spectacle frame with different backgrounds,
and in that the processor is further configured to:

determine opacity information for each of the perspectives based on the images with different backgrounds, and
training the neural rendering network based on the opacity information of the spectacle frame for each perspective.

Also here, the processor optionally may be configured to train the neural rendering network also based on the colour information.

The data processing system may be a general-purpose computer device like a desktop computer or a mobile device like a smartphone or tablet PC, programmed accordingly. The data processing system may also be distributed, where different computing entities communicate with each other.

The apparatus may further include an image acquisition device for providing the plurality of images. In some embodiments, the image acquisition device may include a camera, a rotating holder for the spectacle frame and a background device, which provides different backgrounds, for example a screen displaying different backgrounds in different colours or a mechanical system for changing the background. Through the rotating holder, different perspectives may be captured. The image acquisition device may be calibrated, and sensors may be used for determining the position and therefore the perspective. In other embodiments, the surrounding environment may be used as background. In this case, a holder for the spectacle frame as above may be provided, and a second holder holding the camera may be provided. The image acquisition device may rotate about an axis, such that the direction in space and therefore the background captured in a normal room changes. In all of the above cases, pairs of images may be taken, one image without the spectacle frame and one with the spectacle frame, to provide the image pairs mentioned above.

A corresponding computer program comprising instructions which, when the program is executed by a processor, cause the computer to carry out the computer-implemented steps of any of the methods above.

A computer-readable storage medium having stored thereon the above computer program is also provided.

A data carrier signal carrying the above computer program is also provided.

A computer program stored on a non-transitory tangible computer-readable storage medium, the computer program comprising instructions which, when the program is executed ion a computer, causes the computer to carry out the computer-implemented steps of the methods above is also provided.

The trained neural rendering network may then be used as representation of the spectacle frame in a variety of applications, like virtual try-on or centration, as mentioned above. Based on the virtual try-on, spectacle frames may be ordered or manufactured, and based on the centration, spectacle glasses may be machined in a conventional manner.

Further embodiments will be described referring to the attached drawings.

Fig. 1 is a block diagram of an apparatus according to an embodiment.

Fig. 2 is a flowchart illustrating a method according to an embodiment.

Figs. 3 to 5 are images for illustrating embodiments.

Fig. 6 is a diagram illustrating an image acquisition device according to an embodiment.

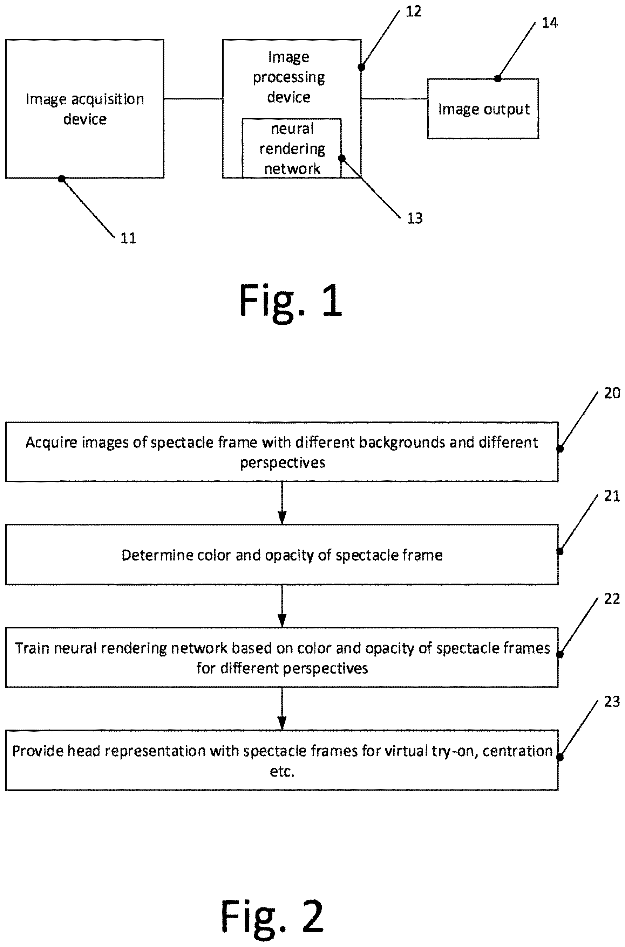

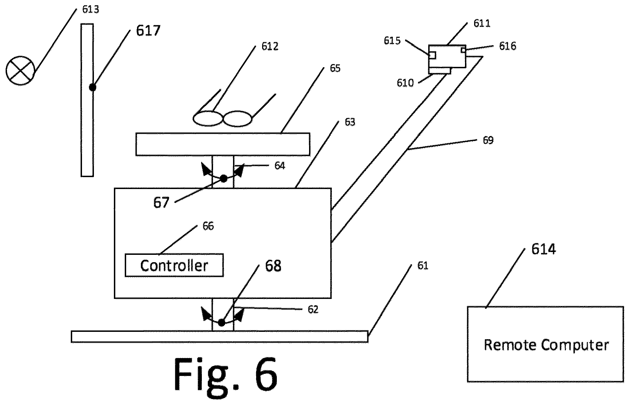

Fig. 1 is a block diagram of a apparatus according to an embodiment. The apparatus of Fig. 1 comprises an image acquisition device 11 which is configured to capture images of a spectacle frame from different perspectives and with different backgrounds. In some embodiments, image acquisition device 11 may be a calibrated device, where the perspective from which the spectacle frame is captured is known by the geometry of the device and may be measured for example by built-in sensors of the device, or by calibration techniques as mentioned above. An example image acquisition device is shown in Fig. 6.

Fig. 6 illustrates a device for scanning, i.e. capturing images of, a spectacle frame 612, as an example for an image acquisition device.

For accommodating spectacle frame 612, the image acquisition device of Fig. 6 comprises a table 65 serving as a first holder, and spectacle frame 612 is placed on table 65. Table 65 is rotatable by a first rotation component 64 about a first axis, as indicated by an arrow 67. Rotation component 65 is coupled to a central part 63 of the image acquisition device of Fig. 6. Central part 63 has an arm 69 extending therefrom, and a second holder 610 for receiving a camera device 611 is provided on arm 69. Camera device 611 may be fixedly connected to the image acquisition device, or, as explained above, may be a mobile device like a smartphone received by second holder 610.

Camera device 611 includes a first camera 615 and a second camera 616. For example, when camera device 611 is a smartphone, first camera 615 may be the so called back camera of the smartphone on a side opposite the display, and second camera 616 may be a front camera on a same side as the display on a same side as the display of the smartphone. Often, the back camera has a higher resolution than the front camera. First camera 615 faces table 65 and hence spectacle frame 612 to capture images of spectacle frame 612. Second camera 616 faces away from table 65 and may be used to capture images of the environment, for example for lighting calibration. In other embodiments, multiple cameras facing the spectacle frame may be used.

Central part 63 is coupled to a stationary base plate 61 via a second rotation component 62, with which central part 63 with arm 69, first rotation component 64, table 65, second holder 610 and camera device 611 may be rotated about a second axis, which in this case coincides with a first axis, as indicated by an arrow 68. In other words, essentially the complete image acquisition device apart from base plate 61 may be rotated.

The image acquisition device of Fig. 6 further includes a controller 66. Controller 66 controls the rotation caused by first rotation component 64 and second rotation component 62. If camera device 611 is a dedicated camera device fixedly connected to the image acquisition device of Fig. 1, controller 66 may also control camera device 611. In case camera device 611 is a mobile device like a smartphone, operation of the image acquisition device of Fig. 6 including operation of camera device 611 may be controlled by software running on the mobile device ("app"), and to control the rotation, camera device 611 may send control signals to controller 16 in a wire-based or wireless manner, as explained above, to cause rotation as indicated by arrows 67 and/or 68.

In operation, the image acquisition device of Fig. 6 is placed in a non-uniform environment, which has some illumination as represented by a lamp 613 (for example a lamp provided in a room, light coming from one more windows, or combinations thereof). Furthermore, a typical room provides different backgrounds, for example different wall decorations, furniture etc..

Controller 66 controls the image acquisition device of Fig. 6 at least in two different image recording modes. In a first mode, first rotation component 64 rotates table 65, whereas second rotation component 62 remains stationary. This means that the spectacle frame 612 rotates with respect to camera device 611 and is captured from different perspectives, but with the same background (as camera device 611, in particular first camera 615, always faces in the same direction and therefore the background is for example formed by a same portion of a wall etc.), and with light coming from the same direction (but, due to the rotation of spectacle frame 612, from different directions relative to spectacle frame 612).

In a second mode, first rotation component 64 remains stationary, while second rotation component 62 rotates the image acquisition device as explained above. Here, the relative position between camera device 611 and spectacle frame 612 remains the same, but the orientation in the room changes and thus the images of the spectacle frame 612 with the same perspective, but with different background and with lights coming from different directions are captured.

The two modes may also be combined, such that for a plurality of different rotational positions of the second component 62, the first rotation component 64 turns the table 65 and images are recorded. In this way, the images with different backgrounds as shown in Fig. 6 may be recorded for different perspectives of the spectacle frame (through the turning of the table 65). Apart from this, calibration measurements may be performed, for example using second camera 616 or a reflective sphere replacing spectacle frame 612, to scan the environment.

The rotation of the image acquisition device of Fig. 6 may for example be measured with rotation sensors provided in the first and second rotation components 64, 62, and calibrated for example by calibration markers viewable by first camera 615 provided on central part 13 and base plate 61.

Alternatively to providing the second rotation component 62, a background screen 617 may be provided. Background screen 617 may be controlled to provide different backround colours, such that also in this way different backgrounds may be provided.

With such a image acquisition device, by capturing images with and without spectacles 612 placed on table 65, image pairs as mentioned above, i.e. only background and spectacle frame (foreground) in front of the background, may be captured. The captured images may then be sent to a remote computer 614, implementing an image processing device as explained above or further below, for processing of the captured images.

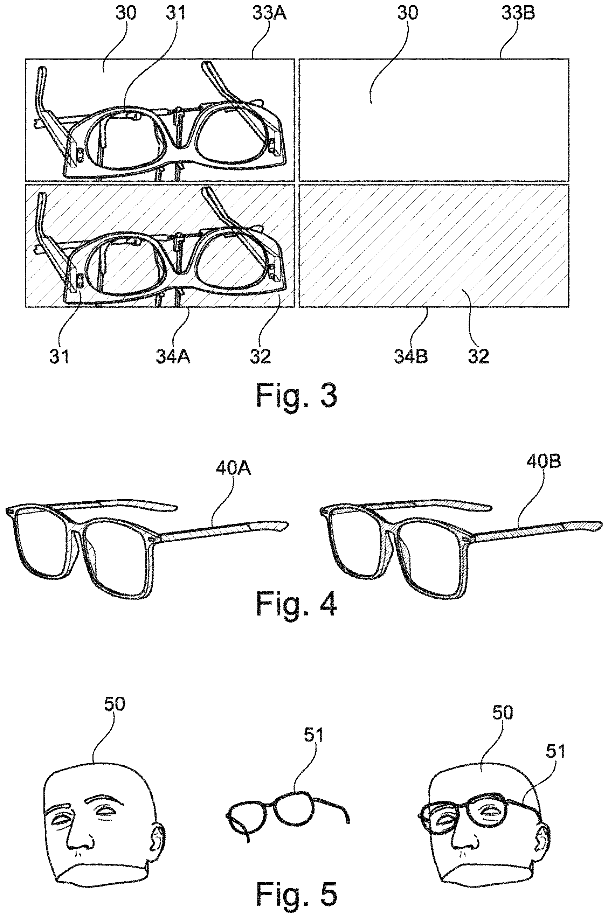

Examples for such image pairs are shown in Fig. 3. In a first image pair, in one image 33A a transparent spectacle frame 31 is captured in front of background 30, and in the other image 33B only background 30 is captured. In the lower row, spectacle frame 31 is captured in front of a background 32 in an image 34A, with a different colour from background 30. As the spectacle frame 31 is at least partially transparent, the apparent colour of the spectacle frame in the image changes according to the background. Image 34B only shows background 32.

Separated from the background, transparent or semi-transparent spectacles therefore appear to have different colours, as shown in Fig. 4, where a spectacle frame image 40A has colours different from a spectacle frame image 40B of the same spectacle frame, but captured with different backgrounds. By using the alpha blending as mentioned above, based on the image pairs of Fig. 3 (or known background colour) the true colour of the spectacle frame and the opacity $\alpha$ may be calculated.

Returning to Fig. 1, this image analysis is performed in an image processing device 12, which may be any data processing system or computer device having a processor programmed accordingly (e.g. implemented on remote computer 614 of Fig. 6 through corresponding programming). Image processing device 12 performs the alpha blending as mentioned above and therefore, for each perspective, generates a colour map of the spectacle frame including an opacity channel $\alpha$, as explained above. For example, each pixel of a spectacle frame as shown in Fig. 4 is provided with colour information giving the true colour of respective pixel of the spectacle and opacity information alpha for each pixel.

These images (i.e. the "foreground", i.e. spectacle frame, with colour information and opacity information for each pixel) is then provided to a neural rendering network 13 to train the same, as explained above. The trained neural rendering network then constitutes a representation of the spectacle frame, which may be used to output an image 13. For example, as shown in Fig. 5, a head image 50 may be provided with a spectacle frame 51 to have a resulting image shown on the right side of Fig. 5 with the head 50 wearing the spectacle frame 51, where transparency of spectacle 51 is correctly rendered.

Fig. 2 is a flowchart illustrating a method according to an embodiment, the method corresponding to the above explained operation of the device of Fig. 1.

At 20, the method comprises acquiring images of a spectacle frame with different backgrounds and different perspectives. This may be done for example by the device shown in Fig. 6. At 21, the method comprises separating the spectacles from the background to determining colour and opacity of the spectacle frames. At 22, the method comprises training a neural rendering network based on the data thus obtained. The trained neural rendering network may then be used for a variety applications like virtual try-on of spectacle frames, centration or other applications including the displaying the representation of the spectacle frame on a screen , as mentioned above and as schematically shown in Fig. 5.

**Claims**

1. A method suitable for generating a representation of a spectacle frame (612), comprising computer-implemented steps of:

    - receiving a plurality of images (33A, 33B, 34A, 34B) of the spectacle frame (612) with different perspectives,
- determining colour information of the spectacle frame (612) for each of the perspectives based on the plurality of images (33A, 33B, 34A, 34B),

**characterized in that**

the step of receiving the plurality of images (33A, 33B, 34A, 34B) of the spectacle frame (612) comprises providing the plurality of images (33A, 33B, 34A, 34B) of the spectacle frame with different backgrounds (30, 32),
and **in that** the method further comprises computer-implemented steps of:

determining opacity information for each of the perspectives based on the images (33A, 33B, 34A, 34B) with different backgrounds (30, 32), and
training a neural rendering network (13) is based on the opacity information of the spectacle frame (612) for each perspective.

2. The method of claim 1, **characterized in that** the colour information of the spectacle frame (612) and the opacity information of the spectacle frame (612) are determined by solving, for each perspective, an equation system of equations linking the true colour, the opacity, the background colour and the colour of the spectacle frame in the image for each image.

3. The method of claim 1 or 2, **characterized in that** for each perspective and each background (30, 32), an image pair is received, wherein a first image (33A, 34A) of the image pair includes the spectacle frame (612) against the respective background (30, 32), and wherein a second image (33B, 34B) of the image pair comprises the respective background (30, 32) without the spectacle frame.

4. The method of claim 1 or 2, **characterized in that** the different backgrounds (30, 32) are backgrounds of a predefined colour.

5. The method of any one of claims 1 to 4, **characterized in that** the neural rendering network (13) comprises a neural radiance field network.

6. The method of any one of claim 1 to 5, **characterized by** further providing the plurality of images (33A, 33B, 34A, 34B) by

- capturing the plurality of images (33A, 33B, 34A, 34B) by rotating the spectacle frame (612) to obtain the images from different perspectives and providing the different backgrounds (30, 32) by a display or a mechanical background changing device, or
- capturing the plurality of images (33A, 33B, 34A, 34B) by rotating the spectacle frame (612) to obtain the images from different perspectives and rotating a camera device (611) used for capturing the images to provide the different backgrounds (30, 32).

7. The method of any one of claims 1 to 6, **characterized by** further comprising providing the trained neural rendering network for displaying the representation on a screen or a virtual try-on or a centration process.

8. An apparatus suitable for generating a representation of a spectacle frame (612), comprising a data processing system (12) comprising a processor configured to:

- receive a plurality of images (33A, 33B, 34A, 34B) of the spectacle frame (612) with different perspectives,
- determine colour information of the spectacle frame (612) for each of the perspectives based on the plurality of images (33A, 33B, 34A, 34B), and
- train a neural rendering network (13) based on the colour information of the spectacle frame (612) for each perspective,

**characterized in that**

the receiving of the plurality of images (33A, 33B, 34A, 34B) of the spectacle frame (612) comprises providing the plurality of images (33A, 33B, 34A, 34B) of the spectacle frame with different backgrounds (30, 32),
and **in that** the data processing system (12) is further configured to determine opacity information for each of the perspectives based on the images (33A, 33B, 34A, 34B) with different backgrounds (30, 32),
wherein training the neural rendering network (13) is further based on the opacity information of the spectacle frame (612) for each perspective.

9. The apparatus of claim 8, **characterized in that** the processor is configured to determine the colour information of the spectacle frame (612) and the opacity information of the spectacle frame (612) by solving, for each perspective, an equation system of equations linking the true colour of the spectacle frame, its opacity, the background colour and the colour of the spectacle frame in the image for each image.

10. The apparatus of claim 8 or 9, **characterized in that** for each perspective and each background (30, 32), an image pair is processed by the image processing device (12), where a first image (33A, 34A) of the image pair includes the spectacle frame (612) against the respective background (30, 32), and wherein a second image (33B, 34B) of the image pair comprises the respective background (30, 32) without the spectacle frame.

11. The apparatus of claim 8 or 9, **characterized in that** the different backgrounds (30, 32) are backgrounds of a predefined colour.

12. The apparatus of any one of claims 8 to 11, **characterized in that** the neural rendering network (13) comprises a neural radiance field network.

13. The apparatus of any one of claim 8 to 12, **characterized by** further comprising an image acquisition device (11) configured to:

    - capture the plurality of images (33A, 33B, 34A, 34B) by rotating the spectacle frame (612) to obtain the images from different perspectives and providing the different backgrounds (30, 32) by a display or a mechanical background changing device, or
    - capture the plurality of images (33A, 33B, 34A, 34B) by rotating the spectacle frame (612) to obtain the images from different perspectives and rotating a camera device (611) used for capturing the images together with the spectacle frame (612) to provide the different backgrounds (30, 32) for the respective perspectives.

14. The apparatus of any one of claims 8 to 13, **characterized in that** the image processing device (12) is configured to provide the trained neural rendering network (13) for displaying the representation on a screen or a virtual try-on or a centration process.

15. A computer program, which, when executed on a computer, causes the computer to execute the method of any one of claims 1 to 5.

```
Image acquisition
device          ────    Image
                        processing
                        device              ────    Image output
                        ┌──────────────┐
                        │  neural      │
                        │  rendering   │
                        │  network     │
                        └──────────────┘
```

11        12        13        14

# Fig. 1

Acquire images of spectacle frame with different backgrounds and different perspectives                                          20

Determine color and opacity of spectacle frame                                          21

Train neural rendering network based on color and opacity of spectacle frames for different perspectives                                          22

Provide head representation with spectacle frames for virtual try-on, centration etc.                                          23

# Fig. 2

30  31  33A  30  33B

31  34A  32  34B  32

**Fig. 3**

40A  40B

**Fig. 4**

50  51  50  51

**Fig. 5**

Fig. 6

Europäisches
Patentamt

European
Patent Office

Office européen
des brevets

# EUROPEAN SEARCH REPORT

**Application Number**

EP 23 16 6350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARTIN-BRUALLA RICARDO ET AL: "GeLaTO: Generative Latent Textured Objects", 11 August 2020 (2020-08-11), TOPICS IN CRYPTOLOGY – CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 242 – 258, XP047590894, | 1-3, 6-10, 13-15 | INV. G06T7/194 G06T19/20 G06V40/16 |
| Y | * abstract * | 4,11 | |
| A | * page 3 – page 6; figures 2,3,14 * | 5,12 | |
| | ----- | | |
| Y | LUO HAIMIN ET AL: "Convolutional Neural Opacity Radiance Fields", 2021 IEEE INTERNATIONAL CONFERENCE ON COMPUTATIONAL PHOTOGRAPHY (ICCP), IEEE, 23 May 2021 (2021-05-23), pages 1-12, XP033936355, DOI: 10.1109/ICCP51581.2021.9466273 [retrieved on 2021-06-25] | 1,2,4-9, 11-15 | |
| A | * abstract * | 3,10 | |
| | * page 2 – page 6; figures 2-4 * | | **TECHNICAL FIELDS SEARCHED (IPC)** |
| | ----- | | |
| Y | SMITH ALVY RAY ET AL: "Blue screen matting", PROCEEDINGS OF THE 3RD INTERNATIONAL CONFERENCE ON INDUSTRIAL AND ENGINEERING APPLICATIONS OF ARTIFICIAL INTELLIGENCE AND EXPERT SYSTEMS – VOLUME 2, ACMPUB27, NEW YORK, NY, USA, 1 August 1996 (1996-08-01), pages 259-268, XP058610400, DOI: 10.1145/237170.237263 ISBN: 978-1-4503-8946-4 | 1,2,4-9, 11-15 | G06T G06V |
| A | * abstract * | 3,10 | |
| | * page 2 – page 7 * | | |
| | ----- | | |
| | -/-- | | |

The present search report has been drawn up for all claims

| Place of search | Date of completion of the search | Examiner |
|---|---|---|
| Munich | 15 September 2023 | Katsoulas, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 23 16 6350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Wexler Y. ET AL: "Bayesian Estimation of Layers from Multiple Images : 7th European Conference on Computer Vision Copenhagen, Denmark, May 28-31, 2002 Proceedings, Part III"<br>In: "Computer Vision – ECCV 2002 : 7th European Conference on Computer Vision Copenhagen, Denmark, May 28-31, 2002 Proceedings, Part III",<br>1 January 2002 (2002-01-01), Springer Berlin Heidelberg, Berlin, Heidelberg,<br>XP093082407,<br>ISSN: 0302-9743<br>ISBN: 978-3-540-47977-2<br>vol. 2352, pages 487-501, DOI:<br>10.1007/3-540-47977-5_32, | 1,6,8, 13,15 | |
| A | * abstract *<br>* page 3 – page 6; figures 1,2 *<br>----- | 2-5,7, 9-11,14 | |
| | | | TECHNICAL FIELDS SEARCHED (IPC) |

The present search report has been drawn up for all claims

| Place of search | Date of completion of the search | Examiner |
|---|---|---|
| Munich | 15 September 2023 | Katsoulas, Dimitrios |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1016135078 A1
- WO 2017174525 A1

**Non-patent literature cited in the description**

- **B. MILDENHAL et al.** NeRF: Representing Scenes as Neural Radiance Fields for View Synthesis. *arXv: 2003.08934v2*
- **K. ZANG et al.** NeRF++: Analyzing and Improving Neural Radiance Fields. *arXiv 2010.07492*
- **C. XIE et al.** FiG-NeRF: Figure-Ground Neural Radiance Fields for 3D Object Category Modelling. *arXiv: 2104.08418v1*
- **H. LUO.** Convolutional Neural Opacity Radiance Field. *arXiv: 2104.017772v1*
- Camera and Projector Calibration. **J.D. KÖHLER.** Enhanced Usability and Applicability for Simultaneous Geometry and Reflectance Acquitsion. Verlag Dr. Hut, 2015
- **T. PORTER et al.** Compositing Digital Images. *Computer Graphics,* July 1984, vol. 18 (3
- **D. RUECKERT et al.** ADOP: Approximate Differentiable One-Pixel Point Rendering. *arXiv:2110.06635v3*